# FASCICULE DE BREVET EUROPEEN

(11) **EP 2 437 981 B1**
(45) Date de publication et mention de la délivrance du brevet: **03.10.2018**
(21) Numéro de dépôt: 10724381.8
(22) Date de dépôt: 28.05.2010
(51) Int. Cl.: B64G 1/62, B64G 1/10

(54) **SYSTÈME D'ATTERRISSAGE D'UN CORPS ET SONDE SPATIALE ÉQUIPÉE D'UN TEL SYSTÈME**
LANDESYSTEM FÜR EINEN KÖRPER UND RAUMSONDE AUSGESTATTET MIT EINEM SOLCHEN SYSTEM
LANDING SYSTEM FOR A BODY AND SPACE PROBE COMPRISING SUCH A SYSTEM

(30) Priorité: 04.06.2009 FR 0953705
(43) Date de publication de la demande: 11.04.2012
(73) Titulaire: Airbus Defence and Space SAS, 78130 Les Mureaux (FR)
(72) Inventeur: BALEMBOY, Christophe, F-33700 Merignac (FR); KINNERSLEY, Mark, 28211 Bremen (DE); LAINE, Robert André, 17138 St Xandre (FR); SEMBÉLY, Xavier, F-31400 Toulouse (FR)
(74) Mandataire: Ipside
(86) Numéro de dépôt international: PCT/EP2010/057393
(87) Numéro de publication internationale: WO 2010/139617

(56) Documents cités:
- US-A- 5 265 829
- US-A1- 2003 208 303

## Description

La présente invention concerne un système d'atterrissage d'un corps sur un sol porteur. L'invention concerne encore un engin spatial tel qu'une sonde spatiale, équipé d'un tel système d'atterrissage pour l'exploration de corps célestes avec atterrissage.

On connaît des dispositifs d'atterrissage pour sonde spatiale comprenant plusieurs jambes d'atterrissage disposées en configuration symétrique, chacune de ces jambes ayant un pied placé à son extrémité. Ces dispositifs servent à amortir correctement la vitesse résiduelle de la sonde spatiale lors du contact de la sonde avec le sol afin d'assurer la survie de cette sonde.

Or, la configuration du site d'atterrissage d'une sonde spatiale n'est typiquement pas, ou peu, connue au préalable. En effet, même lorsqu'il existe des relevés tels que des images, du corps céleste sur lequel la sonde doit se poser, ces relevés sont le plus souvent pris à des distances n'autorisant pas une reconnaissance très détaillée du relief de la surface du site d'atterrissage. De plus, l'attitude d'atterrissage d'une sonde spatiale ne peut être précise en raison des conditions d'environnement mécaniques (vibrations, chocs, ...) et éventuellement, des contraintes environnementales très sévères (températures sur le bouclier) que peut rencontrer la sonde lors de sa descente vers le sol du corps céleste.

Les jambes d'atterrissage sont, en conséquence, dimensionnées en prenant en compte deux cas extrêmes d'atterrissage de la sonde spatiale.

Tout d'abord, l'atterrissage de la sonde spatiale peut se faire selon la direction d'une seule jambe d'atterrissage.

Chaque jambe d'atterrissage de la sonde est, par conséquent, dimensionnée pour pouvoir subir seule le choc initial du contact de la sonde avec le sol du corps céleste. Le dimensionnement de chaque jambe d'atterrissage la rend ainsi capable d'amortir seule l'énergie totale de l'impact d'atterrissage.

A l'inverse, toutes les jambes d'atterrissage de la sonde spatiale peuvent fonctionner en parallèle lors de l'atterrissage. Ces jambes d'atterrissage et leur pied associé ont une longueur identique de sorte qu'ils entrent alors simultanément en contact avec la surface du sol.

Le dimensionnement des jambes d'atterrissage doit alors prendre en compte une limitation du pic de décélération que peut voir la sonde spatiale au moment de l'atterrissage.

Cette limitation en pic de décélération est rendue nécessaire par la préoccupation constante d'éviter que l'atterrissage étant trop rapide, la sonde spatiale soit endommagée structurellement ainsi que la charge utile transportée par celle-ci.

Enfin, la stabilité de la sonde spatiale à la surface du sol du corps céleste est accrue par l'augmentation du nombre de jambes d'atterrissage supportant cette sonde. On cherche donc à avoir des sondes spatiales disposant d'un nombre élevé de jambes d'atterrissage.

Toutefois, il devient alors très difficile de trouver un compromis entre la forte capacité d'amortissement initial que doit posséder chaque jambe d'atterrissage pour éventuellement amortir seule l'impact de l'atterrissage et la faible raideur totale requise pour l'ensemble des jambes d'atterrissage en cas de contact simultané de celles-ci avec le sol.

Les critères de dimensionnement des jambes d'atterrissage pour un atterrissage multi contacts impliquent également une augmentation de la masse du dispositif d'atterrissage variant en n^{3/2}, où n est le nombre de jambes d'atterrissage du dispositif d'atterrissage.

Ainsi, l'accroissement de la stabilité des sondes spatiales apparaît incompatible avec le souci permanent de diminuer la masse de ces sondes.

Il serait, par conséquent, fortement intéressant de disposer d'un système d'atterrissage autorisant une bonne stabilité de la sonde spatiale sur le sol d'un corps céleste tout en minimisant l'augmentation de masse de ce système, associée à l'accroissement du nombre de jambes d'atterrissage.

L'objectif de la présente invention est donc de proposer un système d'atterrissage d'un corps, simple dans sa conception et dans son mode opératoire, fiable et assurant un support stable de ce corps sur la surface du sol, sans augmenter les contraintes sur la charge utile que peut transporter ce corps.

On connaît dans l'état de la technique la demande de brevet américain N° US 2003/0208303, qui décrit un robot ayant différentes fonctions qui sont exigées pour les véhicules d'atterrissage planétaires. Ce document de l'état de la technique décrit en particulier une structure de jambe pour un robot qui est capable de se lever lui-même lorsque renversé, ce qui facilite le décollage et l'atterrissage sur un sol inégal, et qui a une fonction de marche et qui a une fonction de la main capable de fonctionner en trois dimensions. Selon l'invention décrite dans cette demande de brevet américain de l'état de la technique, un robot comprend un corps d'appareil robot principal et au moins trois jambes montées sur le corps principal pour permettre un mouvement en trois dimensions du corps de robot principal tel qu'une action d'auto-érection ou la marche, chaque jambe étant constituée par un bras multi-articulé.

L'invention concerne encore un engin spatial tel qu'une sonde spatiale, équipé d'un tel système d'atterrissage pour l'exploration avec atterrissage, de corps célestes possédant un sol porteur, ce sol porteur pouvant être solide.

A cet effet, l'invention concerne un système d'atterrissage d'un corps comprenant des jambes d'atterrissage à l'extrémité de chacune desquelles est placé un pied, pour freiner l'impact d'atterrissage dudit corps lors de son contact avec le sol et pour supporter ce corps sur le sol après atterrissage.

Selon l'invention, lesdits pieds sont non coplanaires.

Ainsi, tous les pieds, ou extrémités, de ce système d'atterrissage ne sont pas contenus dans un même plan.

Dans différents modes de réalisation de ce système d'atterrissage, la présente invention concerne également les caractéristiques suivantes qui devront être considérées isolément ou selon toutes leurs combinaisons techniquement possibles :
- le nombre des jambes d'atterrissage étant supérieur ou égal à 4, les pieds de ces jambes d'atterrissage définissent plusieurs plans de contact possibles avec le sol, chacun de ces plans contenant les pieds d'au plus trois de ces jambes d'atterrissage de sorte que le nombre des jambes d'atterrissage susceptibles d'entrer simultanément en contact avec le sol lors de l'atterrissage du corps est compris entre 1 et 3 au maximum,
On entend par "atterrissage dudit corps", la phase pendant laquelle le corps volant entre en contact avec le sol par le biais d'une ou plusieurs jambes d'atterrissage et de leur pied associé de son système d'atterrissage, les pieds de ces dernières entrant simultanément en contact avec le sol lorsqu'elles sont plusieurs, celles-ci jouant le rôle d'amortisseur du corps volant.
Les "plans de contact avec le sol" ainsi définis représentent les différentes possibilités de prise de contact des pieds desdits jambes d'atterrissage avec le sol lors de cet atterrissage. A titre purement illustratif, le nombre de plans possibles contenant les pieds de 3 jambes d'atterrissage varie comme Cₙ₃ = n ! / 3 ! x (n-3) !, où n est le nombre de jambes d'atterrissage du système d'atterrissage.
Bien entendu, après atterrissage, le corps peut, selon la configuration du terrain, se retrouver en position instable et se déplacer alors vers une position stable dans laquelle le nombre de jambes d'atterrissage simultanément en contact avec le sol est différent.
Ainsi, chaque jambe d'atterrissage est dimensionnée pour la décélération du corps lors de l'impact d'atterrissage dans une hypothèse de contact simultané avec le sol d'au plus trois jambes d'atterrissage.
Dans le cas purement illustratif où le système d'atterrissage comporte six jambes d'atterrissage alternant trois jambes avec leur pied correspondant de longueur identique d et trois jambes avec leur pied correspondant de longueur identique l avec d>l, la raideur maximale d'amortissement du système d'atterrissage ne cumule ainsi que trois jambes d'atterrissage alors que la stabilité du système est celle d'une configuration à six jambes d'atterrissage.
- ces plans de contact sont inclinés dans une plage angulaire comprise au maximum entre - 20° et + 20° par rapport à un plan horizontal, et encore mieux entre - 10° et + 10° par rapport à un plan horizontal,
On entend ici par "plan horizontal" le plan passant par les pieds de jambes d'atterrissage ayant toutes la même inclinaison par rapport audit corps et la même longueur de l'ensemble jambe d'atterrissage/pied, c'est-à-dire un système d'atterrissage présentant une symétrie totale.
- au moins certains des ensembles comprenant chacun une jambe d'atterrissage et son pied correspondant, ont des longueurs différentes, Autrement dit, dans le cas où les pieds sont tous identiques, les longueurs de certaines jambes d'atterrissage du système d'atterrissage sont différentes. Bien entendu, cette longueur est déterminée dans la position déployée de chacun de ces ensembles.
- le nombre n desdites jambes d'atterrissage étant compris entre 4 et 6, le système comporte 3 ensembles d'une longueur L identique et (n-3) ensembles d'une longueur d identique avec L > d,
Comme précisé ci-dessus, chacun de ces ensembles comporte une jambe d'atterrissage et son pied correspondant.
- ces jambes d'atterrissage et leur pied correspondant ayant des longueurs identiques et étant destinées à être solidaires de la partie inférieure de ce corps, au moins certaines de ces jambes d'atterrissage ont leur axe principal formant un angle d'inclinaison avec la partie inférieure de ce corps qui est différent les uns des autres de sorte que ces pieds ne sont pas contenus dans un même plan horizontal,
- lesdites jambes d'atterrissage étant destinées à être solidaires de la partie inférieure dudit corps, au moins deux desdites jambes d'atterrissage et leur pied correspondant ont une longueur identique mais un angle d'inclinaison de leur axe principal avec ladite partie inférieure qui est différent de sorte que les pieds de ces jambes d'atterrissage ne sont pas contenus dans un même plan horizontal et au moins deux autres desdites jambes d'atterrissage ont un angle d'inclinaison de leur axe principal avec ladite partie inférieure qui est identique de sorte que les pieds de ces jambes d'atterrissage sont contenus dans un même plan horizontal tout en présentant une longueur de ces jambes d'atterrissage avec leur pied correspondant différente,
- chacune desdites jambes d'atterrissage comporte des moyens d'amortissement pour absorber au moins une partie de l'énergie d'impact d'atterrissage.
Ces moyens d'amortissement sont, par conséquent, dimensionnés pour chaque jambe d'atterrissage en tenant compte que seule cette jambe d'atterrissage peut entrer en contact avec le sol lors de l'atterrissage et donc amortir l'impact d'atterrissage, ou qu'à l'extrême, au plus trois desdites jambes d'atterrissage du système d'atterrissage vont entrer simultanément en contact avec la surface dudit sol par l'intermédiaire de leur pied et amortir toutes les trois l'impact d'atterrissage.
Ces moyens d'amortissement sont, par exemple, des éléments déformables viscoélastiques ou inélastiques, lesquels absorbent des quantités substantielles d'énergie via des déformations inélastiques ou viscoélastiques.

L'invention concerne également un engin spatial pour transporter au moins une charge utile.

Selon l'invention, cet engin spatial est équipé d'un système d'atterrissage d'un corps tel que décrit précédemment.

L'invention concerne encore une plateforme réutilisable pour transporter au moins une charge utile.

Selon l'invention, cette plateforme est équipée d'un système d'atterrissage d'un corps tel que décrit précédemment.

Cette plateforme réutilisable peut comporter des attaches de la plateforme à des éléments de liaison flexibles tels que des câbles de sorte que la plateforme peut être levée et déplacée par un organe d'accroche tel qu'un anneau ou crochet de levage d'une grue. Ces attaches qui peuvent être des anneaux, sont placées à chaque coin de la plateforme par exemple.

La plateforme peut être un support plan tel qu'un plancher ajouré ou non. A titre purement illustratif, ce plancher est métallique.

L'invention concerne encore un contenant réutilisable pour transporter au moins une charge utile.

Selon l'invention, ce contenant est équipé d'un système d'atterrissage d'un corps tel que décrit précédemment.

Ce contenant peut être un container. A titre purement illustratif, ce container peut comporter un parachute déployable afin d'être transporté et déployé par aéronef. Le système d'atterrissage dont est équipé ce container vise à protéger la charge utile contenue dans ce container et l'intégrité du container.

L'invention sera décrite plus en détail en référence aux dessins annexés dans lesquels:
- la figure 1 montre une vue en perspective d'un système d'atterrissage de l'art antérieur, ce système ayant une configuration symétrique;
- la figure 2 montre une vue en perspective d'un système d'atterrissage selon un mode de réalisation préféré de l'invention ;

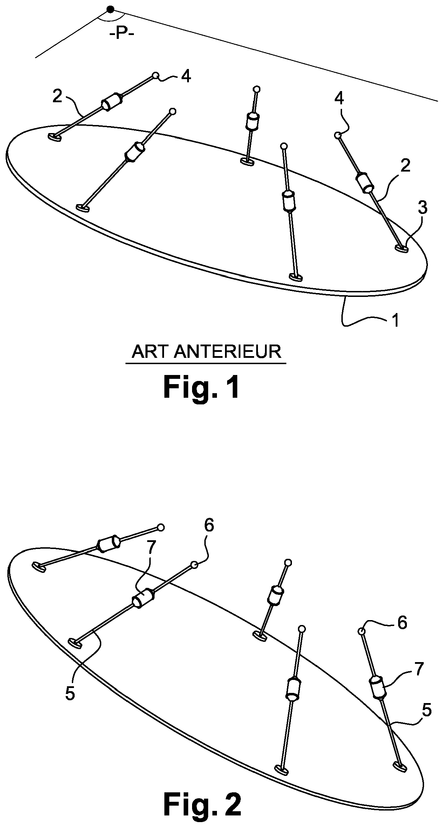

La Figure 1 montre une vue en perspective d'un système d'atterrissage d'une sonde spatiale de l'art antérieur. Seule la partie inférieure de cette sonde 1 est représentée par souci de clarté. Ce système d'atterrissage comprend des jambes d'atterrissage 2 solidaires par une de leurs extrémités 3 de la partie inférieure de cette sonde 1. Chaque jambe d'atterrissage 2 comprend à son autre extrémité un pied 4.

Ces jambes d'atterrissage 2 et leur pied 4 correspondant étant d'une longueur identique, les pieds 4 de ces jambes d'atterrissage définissent un seul plan de contact P de la sonde avec le sol. Cette configuration des jambes d'atterrissage 2 et de leur pied correspondant est dite symétrique.

Ainsi, aux écarts de planéité du sol prés, l'ensemble des pieds 4 sont en contact avec le sol lors de l'atterrissage de la sonde spatiale.

La Figure 2 montre une vue en perspective d'un système d'atterrissage selon un mode de réalisation préféré de l'invention. Ce système d'atterrissage comprend des jambes d'atterrissage 5 à l'extrémité desquelles est placé un pied 6. Chaque jambe d'atterrissage 5 comporte, de plus, des moyens d'amortissement 7 de l'impact d'atterrissage.

Le nombre de jambes d'atterrissage 5 de ce système étant égal à cinq, deux de ces jambes d'atterrissage 5 et leur pied 6 correspondant ont une longueur identique d et les trois jambes d'atterrissage 5 restantes ont avec leur pied correspondant une longueur identique L avec L > d.

Ces ensembles comportant chacun une jambe d'atterrissage 5 et son pied associé 6, qui ont des longueurs différentes définissent ainsi plusieurs plans de contact possibles avec le sol, chacun de ces plans passant par les pieds 6 d'au plus trois de ces jambes d'atterrissage 5 de sorte que le nombre de jambes d'atterrissage 5 susceptibles d'entrer simultanément en contact avec le sol par l'intermédiaire de leur pied 6 lors de l'atterrissage de la sonde spatiale est 1, 2 ou 3 au maximum.

Avec trois ensembles jambe d'atterrissage/pied associé longs et deux ensembles jambe d'atterrissage/pied associé plus courts, les contacts suivants deviennent possibles :
- les pieds des trois ensembles jambe d'atterrissage/pied associé longs touchent le sol, les pieds des deux ensembles plus courts restant en retrait,
- les pieds de deux ensembles jambe d'atterrissage/pied associé longs touchent le sol ainsi que le pied d'un ensemble jambe d'atterrissage/pied associé court, le dernier ensemble jambe d'atterrissage/pied associé long et l'autre ensemble court restent en retrait, et des variantes de ce dernier cas, par exemple en ne considérant pas le même ensemble jambe d'atterrissage/pied associé court qui reste en retrait mais qui touche la surface du sol cette fois.

Ainsi, en adaptant les différences de longueur des jambes d'atterrissage 5 et/ou de leur pied 6 correspondant à leur nombre, il est possible de s'assurer que seules trois jambes d'atterrissage 5 au maximum jouent le rôle d'amortisseurs.

Après amortissement, ces trois jambes d'atterrissage ne correspondant pas nécessairement à une position d'équilibre stable, l'ensemble peut basculer vers une position stable dans laquelle le nombre de jambes d'atterrissage dont le pied est en contact avec le sol est différent.

Au final, on constate que pour assurer la décélération de la sonde spatiale équipée de ce système d'atterrissage, il suffit de dimensionner chaque jambe d'atterrissage 5 avec une hypothèse de contact simultané de 3 pieds maximum, c'est-à-dire de trois jambes d'atterrissage maximum. Ce qui conduit à limiter la masse du système d'atterrissage par rapport à l'état de l'art.

Ce qui vient d'être montré pour des ensembles dont la longueur peut varier, chacun de ces ensembles comprenant une jambe d'atterrissage et son pied correspondant, peut également être obtenu de manière plus générale en s'assurant que tous les pieds peuvent avoir un angle d'inclinaison par rapport au corps volant et une longueur de l'ensemble jambe d'atterrissage et pied correspondant différentes, pourvu que dans tout plan de contact ainsi formé ne contienne au maximum que trois pieds.

## Revendications

1. Système d'atterrissage pour un corps, comprenant des jambes d'atterrissage (5) à l'extrémité de chacune desquelles est placé un pied (6), pour freiner l'impact d'atterrissage dudit corps lors de son contact avec le sol et pour supporter ledit corps sur le sol après atterrissage, l'ensemble desdites jambes d'atterrissage étant destiné à être solidaire de la partie inférieure dudit corps, **caractérisé en ce que** lesdits pieds (6) définissent lors de l'atterrissage plusieurs plans de contact possibles avec le sol.

2. Système selon la revendication 1, **caractérisé en ce que** le nombre desdites jambes d'atterrissage (5) étant supérieur ou égal à 4, chacun desdits plans contenant les pieds (6) d'au plus trois desdites jambes d'atterrissage (5) de sorte que le nombre desdites jambes d'atterrissage (5) susceptibles d'entrer simultanément en contact avec le sol lors de l'atterrissage dudit corps est compris entre 1 et 3 au maximum.

3. Système selon la revendication 2, **caractérisé en ce que** lesdits plans de contact sont inclinés dans une plage angulaire comprise au maximum entre - 20° et + 20° par rapport à un plan horizontal.

4. Système selon l'une quelconque des revendications 1 à 3, **caractérisé en ce qu'**au moins certains des ensembles comprenant chacun une jambe d'atterrissage (5) et son pied (6) correspondant, ont des longueurs différentes.

5. Système selon la revendication 4, **caractérisé en ce que** le nombre n desdites jambes d'atterrissage (5) étant compris entre 4 et 6, le système comporte 3 ensembles d'une longueur L identique et (n-3) ensembles d'une longueur d identique avec L > d.

6. Corps (1) comprenant un système d'atterrissage selon l'une quelconque des revendications 1 à 3, **caractérisé en ce que** lesdites jambes d'atterrissage (5) et leur pied correspondant (6) ayant des longueurs identiques et étant solidaires de la partie inférieure dudit corps (1), au moins certaines desdites jambes d'atterrissage (5) ont leur axe principal formant un angle d'inclinaison avec ladite partie inférieure qui est différent les uns des autres de sorte que les pieds (6) desdites jambes d'atterrissage (5) ne sont pas contenus dans un même plan horizontal.

7. Corps (1) comprenant un système d'atterrissage selon l'une quelconque des revendications 1 à 3, **caractérisé en ce que** lesdites jambes d'atterrissage (5) étant solidaires de la partie inférieure dudit corps, au moins deux desdites jambes d'atterrissage et leur pied correspondant (5) ont une longueur identique mais un angle d'inclinaison de leur axe principal avec ladite partie inférieure qui est différent de sorte que les pieds (6) desdits jambes d'atterrissage (5) ne sont pas contenus dans un même plan horizontal et **en ce que** au moins deux autres desdites jambes d'atterrissage (5) ont un angle d'inclinaison de leur axe principal avec ladite partie inférieure qui est identique de sorte que les pieds (6) desdites jambes d'atterrissage (5) sont contenus dans un même plan horizontal tout en présentant une longueur desdites jambes d'atterrissage avec leur pied correspondant (6) différente.

8. Corps (1) comprenant un système d'atterrissage selon l'une quelconque des revendications 1 à 5, **caractérisé en ce que** chacune desdites jambes d'atterrissage (5) comporte des moyens d'amortissement (7) pour absorber au moins une partie de l'énergie d'impact d'atterrissage.

9. Engin spatial pour transporter au moins une charge utile, **caractérisé en ce qu'**il est équipé d'un système d'atterrissage selon l'une quelconque des revendications 1 à 5.

10. Contenant réutilisable pour transporter une charge utile, **caractérisé en ce qu'**il est équipé d'un système d'atterrissage selon l'une quelconque des revendications 1 à 5.

## Patentansprüche

1. Landesystem für einen Körper, das Landebeine (5) umfasst, an deren Ende jeweils ein Fuß (6) angeordnet ist, um den Landeaufprall des Körpers während seines Kontakts mit dem Boden abzubremsen und um den Körper nach dem Landen auf dem Boden abzustützen, wobei alle Landebeine dazu bestimmt sind, fest mit dem unteren Teil des Körpers verbunden zu sein, **dadurch gekennzeichnet, dass** die Füße (6) beim Landen mehrere mögliche Kontaktebenen mit dem Boden bilden.

2. System nach Anspruch 1, **dadurch gekennzeichnet, dass**, da die Anzahl der Landebeine (5) größer oder gleich 4 ist, jede der Ebenen die Füße (6) von höchstens drei der Landebeine (5) enthält, so dass die Anzahl der Landebeine (5), die in der Lage sind, während der Landung des Körpers gleichzeitig den Boden zu berühren, zwischen 1 und maximal 3 liegt.

3. System nach Anspruch 2, **dadurch gekennzeichnet, dass** die Kontaktebenen in einem Winkelbereich von maximal - 20° bis + 20° in Bezug auf eine waagerechte Ebene geneigt sind.

4. System nach einem der Ansprüche 1 bis 3, **dadurch gekennzeichnet, dass** zumindest einige der Baugruppen, die jeweils ein Landebein (5) und seinen entsprechenden Fuß (6) umfassen, unterschiedliche Längen aufweisen.

5. System nach Anspruch 4, **dadurch gekennzeichnet, dass**, da die Anzahl n der Landebeine (5) zwischen 4 und 6 liegt, das System 3 Baugruppen mit gleicher Länge L und (n-3) Baugruppen mit gleicher Länge d umfasst, wobei L > d ist.

6. Körper (1), umfassend ein Landesystem nach einem der Ansprüche 1 bis 3, **dadurch gekennzeichnet, dass**, da die Landebeine (5) und ihr entsprechender Fuß (6) gleiche Längen aufweisen und fest mit dem unteren Teil des Körpers (1) verbunden sind, zumindest einige der Landebeine (5) eine Hauptachse haben, die mit dem unteren Teil einen Neigungswinkel bilden, der jeweils verschieden ist, so dass sich die Füße (6) der besagten Landebeine (5) nicht in einer gemeinsamen waagerechten Ebene befinden.

7. Körper (1) umfassend ein Landesystem nach einem der Ansprüche 1 bis 3, **dadurch gekennzeichnet, dass**, da die Landebeine (5) fest mit dem unteren Teil des Körpers verbunden sind, mindestens zwei der Landebeine und ihr entsprechender Fuß (5) eine gleiche Länge aber einen unterschiedlichen Neigungswinkel ihrer Hauptachse zum unteren Teil aufweisen, so dass sich die Füße (6) dieser Landebeine (5) nicht in einer gemeinsamen waagerechten Ebene befinden und dass mindestens zwei weitere Landebeine (5) einen gleichen Neigungswinkel ihrer Hauptachse mit dem unteren Teil aufweisen, so dass sich die Füße (6) der Landebeine (5) in einer gemeinsamen waagerechten Ebene befinden, bei gleichzeitig unterschiedlicher Länge der Landebeine mit ihrem entsprechenden Fuß (6).

8. Körper (1) umfassend ein Landesystem nach einem der Ansprüche 1 bis 5, **dadurch gekennzeichnet, dass** jedes der Landebeine (5) Dämpfungsmittel (7) zum Absorbieren von mindestens einem Teil der Aufprallenergie bei der Landung aufweist.

9. Raumfahrzeug zum Transportieren mindestens einer Nutzlast, **dadurch gekennzeichnet, dass** es mit einem Landesystem nach einem der Ansprüche 1 bis 5 ausgerüstet ist.

10. Mehrwegbehälter zum Transportieren einer Nutzlast, **dadurch gekennzeichnet, dass** er mit einem Landesystem nach einem der Ansprüche 1 bis 5 ausgerüstet ist.

## Claims

1. Landing system for a body, comprising landing legs (5) of which at the end of each is placed a footpad (6), intended for braking the landing impact of said body when coming into contact with the ground and for supporting said body on the ground after landing, with all of said landing legs intended to be integral with the lower portion of said body, **characterised in that** said footpads (6) define at the time of landing several possible contact planes with the ground.

2. System according to claim 1, **characterised in that** the number of said landing legs (5) being greater than or equal to 4, each one of said planes containing the footpads (6) of at most three of said landing legs (5) in such a way that the number of said landing legs (5) able to simultaneously come into contact with the ground during the landing of said body is between 1 and 3 at most.

3. System according to claim 2, **characterised in that** said contact planes are inclined in an angular range between at most -20° and + 20° with respect to a horizontal plane.

4. System according to any of claims 1 to 3, **characterised in that** at least some of the units each comprising a landing leg (5) and its corresponding footpad (6), have different lengths.

5. System according to claim 4, **characterised in that** the number n of said landing legs (5) being between 4 and 6, the system comprises 3 units of an identical length L and (n-3) units of an identical length d with L > d.

6. Body (1) comprising a landing system according to any of claims 1 to 3, **characterised in that** said landing legs (5) and their corresponding footpad (6) having identical lengths and being integral with the lower portion of said body (1), at least some of said landing legs (5) have their main axis forming an angle of inclination with said lower portion which is different from one another in such a way that the footpads (6) of said landing legs (5) are not contained in the same horizontal plane.

7. Body (1) comprising a landing system according to any of claims 1 to 3, **characterised in that** said landing legs (5) being integral with the lower portion of said body, at least two of said landing legs and their corresponding footpad (5) have an identical length but an angle of inclination of their main axis with said lower portion which is different in such a way that the footpads (6) of said landing legs (5) are not contained in the same horizontal plane and **in that** at least two other of said landing legs (5) have an angle of inclination of their main axis with said lower portion that is identical in such a way that the footpads (6) of said landing legs (5) are contained in the same horizontal plane while still having a length of said landing legs with their corresponding footpad (6) that is different.

8. Body (1) comprising a landing system according to any of claims 1 to 5, **characterised in that** each one of said landing legs (5) comprises means for absorption (7) in order to absorb at least one portion of the energy of the landing impact.

9. Spacecraft for transporting at least one payload, **characterised in that** it is provided with a landing system according to any of claims 1 to 5.

10. Container that can be reused to transport a payload, **characterised in that** it is provided with a landing system according to any of claims 1 to 5.
